# FASCICULE DE BREVET EUROPEEN

(11) **EP 0 881 579 B1**
(45) Date de publication et mention de la délivrance du brevet: **31.07.2002**
(21) Numéro de dépôt: 98401148.6
(22) Date de dépôt: 14.05.1998
(51) Int. Cl.: G06F 12/08

(54) **Compteurs de remplacement pour machine avec mémoire à accès non uniforme.**
Ersetzungszähler für Maschine mit nichtuniformen Speicherzugriffen
Replacement counters for non-uniform memory access machine

(30) Priorité: 26.05.1997 FR 9706388
(43) Date de publication de la demande: 02.12.1998
(73) Titulaire: BULL S.A., 78430 Louveciennes (FR)
(72) Inventeur: Bordaz, Thierry, 38420 Domère (FR); Sorace, Jean-Dominique, 38190 Lancey (FR)

(56) Documents cités:
- PATENT ABSTRACTS OF JAPAN vol. 014, no. 462 (P-1113), 5 octobre 1990 & JP 02 181844 A (MATSUSHITA ELECTRIC IND CO LTD), 16 juillet 1990
- LENOSKI D ET AL: "THE DASH PROTOTYPE: LOGIC OVERHEAD AND PERFORMANCE" IEEE TRANSACTIONS ON PARALLEL AND DISTRIBUTED SYSTEMS, vol. 4, no. 1, 1 janvier 1993, pages 41-61, XP000381324
- VERGHESE B ET AL: "OPERATING SYSTEM SUPPORT FOR IMPROVING DATA LOCALITY ON CC-NUMA COMPUTE SERVERS" ACM SIGPLAN NOTICES, vol. 31, no. 9, septembre 1996, pages 279-289, XP000639239
- KUMAR M J ET AL: "HIERARCHICAL DIRECTORY-BASED SHARED MEMORY ARCHITECTURE" COMPUTER JOURNAL, vol. 38, no. 3, 1 janvier 1995, pages 207-216, XP000558437

## Description

L'invention concerne un procédé de production de machine avec mémoire à accès non uniforme et cohérence antémémoire et une machine adaptée à la mise en oeuvre d'un tel procédé, dans le domaine informatique.

Dans le domaine informatique, il est possible d'augmenter la puissance d'une machine en augmentant le nombre de processeurs dont elle est composée. Un type de machines connu sous le nom SMP permet aux différents processeurs d'une même machine d'accéder de façon symétrique à sa mémoire au moyen d'un bus système. Ce sont des machines avec mémoire à accès uniforme dans la mesure où le temps d'accès à la mémoire est sensiblement le même pour toutes les données accédées. Cependant, la courbe de performances de telles machines ne croit pas de façon linéaire en fonction du nombre de processeurs. Un nombre élevé de processeurs fait que la machine gère plus de problèmes d'accessibilité à ses ressources qu'elle n'en dispose pour exécuter des applications. Ceci a pour conséquence d'infléchir considérablement la courbe de performances lorsque le nombre de processeurs dépasse une valeur optimale souvent estimée de l'ordre de quatre. L'état de la technique propose différentes solutions à ce problème.

Une solution connue consiste à regrouper en grappes plusieurs machines de façon à les faire communiquer entre elles au moyen d'un réseau. Chaque machine possède un nombre optimal, par exemple de quatre processeurs et son propre système d'exploitation. Elle établit une communication avec une autre machine toutes les fois qu'elle effectue un traitement sur des données détenues à jour par cette autre machine. Le temps nécessaire à ces communications et la nécessité de travailler sur des données cohérentes posent des problèmes de latence pour des applications volumineuses telles que par exemple les applications réparties qui demandent de nombreuses communications. La latence est la durée qui sépare l'instant d'émission d'une requête d'accès à la mémoire et l'instant auquel la réponse à cette requête est reçue.

Une autre solution connue est celle des machines de type NUMA. Ce sont des machines avec mémoire à accès non uniforme (Non Uniform Memory Access en anglais), dans la mesure où le temps d'accès à la mémoire varie selon la localisation des données accédées. Une machine de type NUMA est constituée de plusieurs modules, chaque module comprenant un nombre optimal de processeurs et une partie physique de la mémoire totale de la machine. Une telle machine est à accès mémoire non uniforme car un module accède généralement plus facilement à une partie physique de la mémoire qu'il ne partage pas avec un autre module qu'à une partie qu'il partage. Bien que chaque module possède un bus système privé reliant ses processeurs et sa mémoire physique, un système d'exploitation commun à tous les modules permet de considérer l'ensemble des bus systèmes privés comme un seul et unique bus système de la machine. Un adressage logique affecte un lieu de résidence à un emplacement de mémoire physique déterminé d'un module. Pour un processeur considéré, on distingue les accès à une partie de mémoire locale, située physiquement sur le même module que le processeur et les accès à une partie de mémoire distante, située physiquement sur un ou plusieurs autres modules que celui où est situé le processeur.

Un type particulier de machines NUMA est le type CCNUMA, c'est à dire celui des machines à cohérence antémémoire (Cache Coherency en anglais). Un mécanisme d'antémémoire partagée fait qu'à un instant donné, une copie valide, c'est à dire à jour, de ce bloc n'est pas nécessairement localisée dans son emplacement de mémoire physique de résidence. Une ou plusieurs copies à jour du bloc peuvent ainsi migrer d'un module à l'autre au gré des demandes applicatives et d'appels système. La mémoire physique, localisée dans un module considéré, est celle à laquelle le module considéré accède le plus rapidement, car directement au moyen de son bus système local. La mémoire physique, éloignée dans un autre module, est celle à laquelle le module considéré accède le moins rapidement, car nécessitant une ou plusieurs transactions entre modules. La mémoire physique, locale au module considéré, comprend une première partie spécialement affectée aux blocs de données résidents dans ce module, et une deuxième partie spécialement affectée aux copies de blocs résidents dans d'autres modules. La deuxième partie de mémoire physique constitue une antémémoire de mémoire éloignée dans les autres modules.

Un bloc résident dans la première partie de mémoire physique n'est pas immédiatement disponible si son contenu ne constitue pas une copie à jour, c'est par exemple le cas si un ou plusieurs autres modules partagent ce bloc et si l'un de ces autres modules en détient une copie à jour, en termes de cohérence mémoire. Pour gérer le partage de blocs résidents dans sa première partie de mémoire physique, avec d'autres modules, le module considéré dispose d'une table de mémoire locale LMD (Local Memory Directory en anglais). La table LMD est constituée de plusieurs lignes dont chacune est destinée à référencer un bloc résident dans le module et partagé avec un ou plusieurs autres modules. Plus la table LMD contient de lignes, plus de blocs résidents pourront être partagés par les autres modules à un instant donné. Ce qui est intéressant pour les autres modules mais peut l'être moins pour le module considéré dont la localité des copies à jour de ses blocs résidents risque d'être plus dispersée et par conséquent d'accès plus long. D'autre part, il est préférable d'implanter la table LMD dans une mémoire à accès rapide car elle intervient dans l'accès à la première partie de mémoire physique. Le coût de mise en oeuvre de mémoires à accès rapide, par exemple de mémoires statiques, fait qu'il serait démesuré de référencer, dans la table LMD, la totalité des blocs résidents dans la première partie de mémoire physique.

Un bloc non résident dans la première partie de mémoire physique est immédiatement disponible si une copie à jour de ce bloc est accessible dans la deuxième partie de mémoire physique. Pour gérer la présence de copies à jour dans la deuxième partie de mémoire physique, le module considéré dispose d'une table de mémoire distante RCT (Remote Cache Table en anglais). La table RCT est constituée de plusieurs lignes dont chacune est destinée à correspondre avec un emplacement de la deuxième partie de mémoire physique, chaque emplacement étant destiné à contenir une copie de bloc référencé par cette ligne. La table RCT contient donc autant de lignes que la deuxième partie de mémoire physique peut contenir d'emplacements. On conçoit que plus grande sera la taille de la deuxième partie de mémoire physique, plus celle-ci pourra contenir de copies de blocs résidents dans d'autres modules. Cependant, une taille de la deuxième partie de mémoire physique, prévue pour contenir instantanément des copies de l'ensemble des blocs résidents dans les autres modules serait disproportionnée,. D'autre part, il est préférable d'implanter la table RCT dans une mémoire à accès rapide car elle intervient dans l'accès à la deuxième partie de mémoire physique. Le coût de mise en oeuvre de mémoires à accès rapide, par exemple de mémoires statiques, fait qu'il serait démesuré de référencer, dans la table RCT, la totalité des blocs résidents dans les autres modules.

**D1** (Lenoski D. et al: *"The Dash prototype: logic overhead and performance"* IEEE Transactions on Parallel and Distributed Systems, Vol. 4, no. 1, 1 janvier 1993, pages 41-61) divulgue une architecture CC-NUMA similaire mais où la première et la deuxième partie sont dans deux mémoire physiques séparées. Des compteurs permettent d'effectuer du monitoring d'événements apparaissant dans la mémoire distribuée et d'évaluer les choix de conception du prototype DASH.

Pour produire une machine constituée de plusieurs modules dont chacun comprend une table LMD et une table RCT, les contraintes ci-dessus évoquées montrent la nécessité pour ces tables d'être de taille convenable avec les performances souhaitées de la machine. Le problème est que cette taille convenable est difficile à appréhender a priori.

L'invention a pour objet un procédé de production de machine constituée de plusieurs modules, tel que définit dans la revendication 1.

L'invention a aussi pour objet une machine constituée de plusieurs modules, telle que définit à la revendication 3.

L'invention sera mieux comprise à l'aide de la description d'un exemple de réalisation, en référence aux figures.
La figure 1 présente une architecture de machine à quatre modules.
La figure 2 présente certains détails de l'organe précédemment cité, situé dans un module considéré local.
La figure 3 présente certains détails de l'organe précédemment cité, situé dans un module considéré distant.
La figure 4 présente d'autres détail du dit organe pour mettre en oeuvre l'invention.

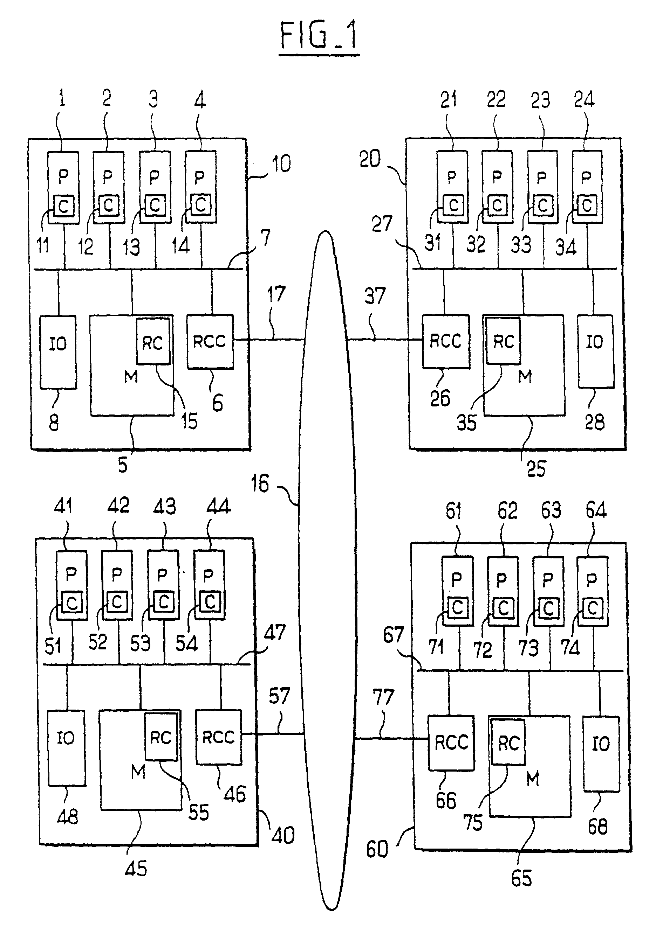

La figure 1 présente un exemple d'architecture de machine à accès de mémoire non uniforme constituée de quatre modules 10, 20, 40 et 60 interconnectés au moyen d'un anneau 16. La description qui suit en référence à la figure 1 reste valable pour un nombre quelconque de modules supérieur ou égal à deux. La connexion entre les modules peut être réalisée au moyen d'un ou plusieurs anneaux commutés ou par tout autre type de connexions tels que les interconnexions en grilles, en hypercube ou par autocommutateur (crossbar en anglais) pour n'en citer que quelques-uns parmi les plus connus. L'interconnexion des modules permet de faire des transactions entre modules qui utilisent le protocole de cohérence de mémoire.

Le module 10 comprend quatre processeurs 1 à 4, une mémoire 5 et un organe 6 de connexion aux autres modules par l'anneau 16. Les différents éléments 1 à 6 sont reliés entre eux par un bus système 7 dans le module 10. Le module 20 comprend quatre processeurs 21 à 24, une mémoire 25 et un organe 26 de connexion aux autres modules par l'anneau 16. Les différents éléments 21 à 26 sont reliés entre eux par un bus système 27 dans le module 20. Le module 40 comprend quatre processeurs 41 à 44, une mémoire 45 et un organe 46 de connexion aux autres modules par l'anneau 16. Les différents éléments 41 à 46 sont reliés entre eux par un bus système 47 dans le module 40. Le module 60 comprend quatre processeurs 61 à 64, une mémoire 65 et un organe 66 de connexion aux autres modules par l'anneau 16. Les différents éléments 61 à 66 sont reliés entre eux par un bus système 67 dans le module 60. L'organe 6, respectivement 26, 46, 66 est connecté sur l'anneau 16 au moyen d'une liaison 17, respectivement 37, 57, 77.

Chaque processeur 1 à 4, 21 à 24, 41 à 44, 61 à 64, possède respectivement une antémémoire privée, interne et ou externe, 11 à 14, 31 à 34, 51 à 54, 71 à 74. De plus, le module 10 comprend une antémémoire 15 d'accès à distance, nommée RC, le module 20 comprend une antémémoire 35 d'accès à distance, nommée RC, le module 40 comprend une antémémoire 55 d'accès à distance, nommée RC, le module 60 comprend une antémémoire 75 d'accès à distance, nommée RC. De façon à pouvoir paramétrer la taille de l'antémémoire 15, 35, 55 et ou 75, il est avantageux de placer physiquement celle-ci dans une zone réservée respectivement de la mémoire 5, 25, 45, 65, tel que le montre la figure 1. Dans ce cas, la suite de la description considère la mémoire 5', respectivement 25', 45', 65' comme constituée de blocs de données de la mémoire 5, respectivement 25, 45, 65 ne comprenant pas de blocs de données de l'antémémoire 15, respectivement 35, 55, 75. Dans le cas où les antémémoires 15, 35, 55, 75 sont réalisées au moyen de composants physiques différents de ceux des mémoires 5, 25, 45, 65, il faut comprendre les références 5', 25', 45', 65', identiques aux références 5, 25, 45, 65.

Chaque processeur 1 à 4, 21 à 24, 41 à 44 et 61 à 64 accède à des blocs de données contenus dans les mémoires 5', 25', 45', 65' au moyen d'adresses logiques d'un seul espace d'adressage, sans distinguer si les mémoires 5', 25', 45', 65' sont locales, appartenant au même module que le processeur, ou distantes, appartenant à un autre module que le processeur. Dans le module 10, c'est l'organe 6 qui distingue si l'adresse logique correspond à une adresse physique locale de bloc résidant dans la mémoire 5', ou si l'adresse logique correspond à une adresse physique distante de bloc résidant dans l'un des modules 20, 40, 60, par exemple au moyen des bits de poids fort de l'adresse logique qui indiquent le module où se situe physiquement la mémoire adressée, les bits de poids faible indiquant alors l'adresse physique à l'intérieur du module de résidence. Dans le module 20, c'est l'organe 26 qui distingue si l'adresse logique correspond à une adresse physique locale de bloc résidant dans la mémoire 25', ou si l'adresse logique correspond à une adresse physique distante de bloc résidant dans l'un des modules 40, 60, 10 par exemple au moyen des bits de poids fort de l'adresse logique qui indiquent le module où se situe physiquement la mémoire adressée, les bits de poids faible indiquant alors l'adresse physique à l'intérieur du module de résidence, et ainsi de suite pour les autres modules. Les bits de poids fort précédemment mentionnés constituent un champ A4 de l'adresse logique. Les blocs de données ainsi accédés constituent un ensemble SM de mémoire partagée par tous les processeurs.

L'exemple qui suit, en référence au processeur 1, reste valable pour chacun des autres processeurs 2 à 4 en référence au module 10 ainsi que 21 à 24 en référence au module 20, 41 à 44 en référence au module 40 et 61 à 64 en référence au module 60.

Le processeur 1 traite un mot contenu dans un bloc B1 de données de l'ensemble SM au moyen de son antémémoire privée 11 suivant un mécanisme connu d'antémémoire, tel que celui à correspondance directe, à correspondance associative ou associative par ensemble de blocs, sans qu'il soit nécessaire ici de rappeler ces différents mécanismes.

Rappelons simplement qu'une antémémoire comprend essentiellement une mémoire à accès rapide et une table de correspondance non représentées sur les figures. Dans le cas d'un mécanisme à correspondance directe, on distingue essentiellement trois champs dans l'adresse logique d'un mot par ordre décroissant du poids des bits. Un premier champ A1 appelé étiquette, un deuxième champ A2 appelé indexe et un troisième champ A3 appelé adresse du mot dans le bloc de données contenant ce mot. Le premier et le deuxième champ constituent habituellement l'adresse logique du bloc B1. L'indexe A1 pointe sur une ligne d'une table de correspondance qui contient essentiellement deux valeurs. La première valeur est l'étiquette A1' d'un bloc B2 dont une image physique est directement adressée dans la mémoire à accès rapide par ce même indexe. La deuxième valeur est un code de statut qui indique si le bloc B2 est détenu en exclusivité par le processeur, partagé par un autre processeur et dans ce cas si son contenu est valide ou s'il a été modifié par cet autre processeur.

Si l'étiquette A1 du bloc B1 est égale à l'étiquette A1' du bloc B2 et si le code de statut indique une exclusivité ou un contenu valide, le bloc B2 n'est autre que le bloc B1, contenu physiquement dans la mémoire à accès rapide et le processeur peut directement traiter les mots contenus dans ce bloc en les adressant physiquement dans la mémoire à accès rapide au moyen des deuxième et troisième champs de l'adresse logique. Si le code de statut indique un partage, le mécanisme d'antémémoire envoie sur le bus 7 un signal S1 pour indiquer une modification à l'adresse du bloc B1, de façon à modifier le code de statut de ce bloc dans les antémémoires qui le partagent.

Si l'étiquette A1 du bloc B1 est différente de l'étiquette A1' du bloc B2 ou si le code de statut indique un partage et un contenu modifié, le processeur ne peut pas directement traiter les mots contenus dans ce bloc en les adressant physiquement dans la mémoire à accès rapide au moyen des deuxième et troisième champs de l'adresse logique. Si le code de statut indique une exclusivité, le mécanisme d'antémémoire envoie une requête Q2 d'écriture du bloc B2 dans la mémoire partagée de façon à libérer une place dans l'antémémoire à l'adresse physique indiquée par l'indexe A2 puis envoie une requête Q1 de lecture du bloc B1 dans la mémoire partagée de façon à charger le bloc B1 dans l'antémémoire à l'adresse physique indiquée par l'indexe A2. Sinon, le mécanisme d'antémémoire envoie une requête Q1 de lecture du bloc B1 dans la mémoire partagée de façon à charger le bloc B1 dans l'antémémoire à l'adresse physique indiquée par l'indexe A2.

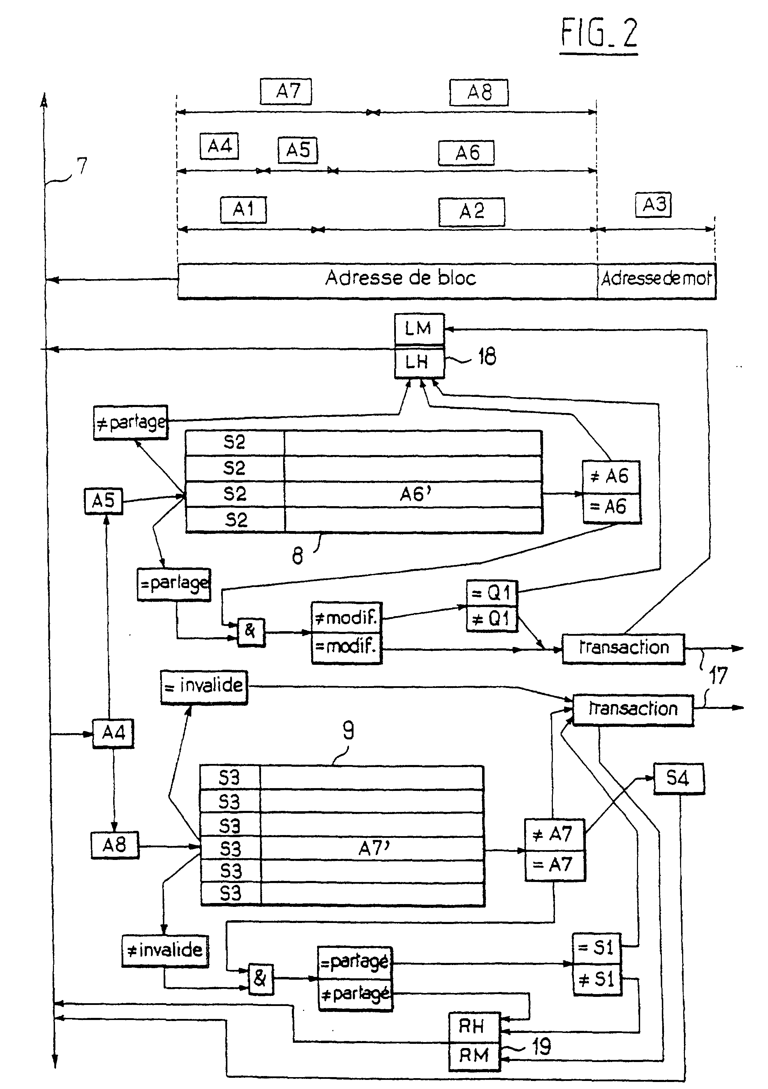

La figure 2 présente un premier niveau de détails de l'organe 6, avec les éléments matériels et logiques mis en oeuvre lorsqu'une adresse de bloc constituée des champs A1 et A2, circule sur le bus 7 en étant liée à un signal S1, une requête Q1 ou Q2. L'organe 6, nommé RCC, comprend une table 8, nommée LMD, une table 9, nommée RCT, un registre 18 et un registre 19. L'adresse du bloc est également partagée en trois champs A4 à A6 ou en deux champs A7 et A8. Le champ A4 est constitué des bits de poids plus fort que ceux du champ A5 et le champ A6 est constitué des bits de poids plus faible que ceux du champ A5. Le champ A8 est constitué des bits de poids faible et le champ A7 est constitué des bits de poids fort en quantité supérieure à celle des bits du champ A4 de façon à recouvrir le champ A4. L'utilité des champs A4 à A8 apparaîtra dans la suite de la description. La logique d'écriture dans les registres 18 et 19 en fonction des valeurs des champs A4 à A8, est représentée au moyen de cellules dans lesquelles des fonctions logiques sont traitées. Chaque paire de cellules contenant le même terme, précédé du signe = dans l'une et du signe ≠ dans l'autre, représente un comparateur dont le résultat active un étage logique en aval. Dans chacun des registres 18 et 19 est écrit l'un de deux états possibles d'un signal, représentés symboliquement par une paire de cellules. La logique décrite peut être réalisée au moyen d'un microprocesseur spécialement dédié à l'organe 6. En réalisant cette logique au moyen de circuits matériels, on augmente sa vitesse d'exécution. Les explications en référence à la figure 2 pour l'organe 6 considéré local au module 10 et distant aux modules 20, 40, 60, restent valables pour les organes 26, 46, 66, en remplaçant les références par permutation circulaire et en particulier, en remplaçant suivant la même permutation circulaire 8 par 28, 48 ou 68, et 9 par 29, 49 ou 69 suivant le module considéré.

Lorsque l'organe 6 voit passer sur le bus 7, le signal S1, la requête Q1 ou la requête Q2, il traite le bloc concerné par un mécanisme antémémoire à l'aide de sa table 8 si les bits de poids fort contenus dans le champ A4 de l'adresse logique indiquent que le bloc concerné réside physiquement dans la mémoire 5', locale au module 10, et à l'aide de sa table 9 si les bits de poids fort de l'étiquette indiquent que le bloc concerné réside physiquement dans l'un des modules 20, 40 ou 60 distant.

La table 8 est indexée par m bits constituant un champ A5 de l'adresse logique succédant aux bits de poids fort de l'étiquette. La valeur du nombre m détermine directement la taille de la table 8 dont le nombre de lignes est alors égal à 2^{m}. Chaque ligne de la table 8 contient les bits de poids faible constituant un champ A6 de l'adresse logique d'un bloc partagé avec un ou plusieurs modules distants et un code de statut S2. Le code de statut S2 est par exemple un multiplet constitué de bits de présence et de bits d'état. A chaque module 20, 40, 60, distant du module 10 dans lequel réside le bloc référencé par les champs A5 et A6, est attribué un bit de présence pour indiquer la présence on non d'un partage de ce bloc avec ledit module distant 20, 40, 60. Le ou les bits d'état indiquent si le bloc est modifié par un module distant. A un instant donné, un seul module détient la copie modifiée qui constitue une version la plus à jour du bloc. C'est à dire que si le code de statut S2 indique une modification, il n'y a plus qu'un seul bit de présence qui indique le partage de ce bloc avec un module distant, c'est le bit attribué au module qui contient la version la plus à jour. La copie du bloc dans le module 10 n'est plus à jour et les copies du bloc dans les autres modules sont invalidées. Si le code de statut n'indique pas de modification, cela signifie que le module 10 détient une copie à jour du bloc et que tous les modules dont le bit de présence est levé, détiennent une copie à jour du bloc, partagée avec le module 10. Si aucun bit de présence n'indique la présence d'un partage avec un module distant, la copie du bloc la plus à jour du bloc se trouve dans le module 10. La ligne de la table 8 correspondante est en fait disponible pour référencer un autre bloc si besoin. Les bits de poids faible de l'adresse logique d'un bloc sont ici les bits qui succèdent aux m bits précédemment mentionnés, de sorte que la concaténation des champs A4, A5 et A6 recouvre la concaténation des champs A1 et A2. Les champs A5 et A6 permettent d'adresser physiquement le bloc dans la mémoire locale constituée par la mémoire 5'.

Si la ligne indexée par les m bits du champ A5 contient une valeur d'adresse différente de celle du bloc traité, cela signifie qu'aucun autre module que le module 10 n'y accède. Le traitement du bloc reste alors local au module 10 et il n'est pas nécessaire de le répertorier dans la table 8 car sa mise à jour dans la mémoire 5' et éventuellement dans les antémémoires privées 11 à 14 suffit. L'organe 6 génère un signal LH de succès local pour indiquer un accès local honoré (local hit en anglais) sans transaction avec un module distant. Le signal LH est écrit dans le registre 18. Il en est de même si aucun bit du code de statut S2 n'indique de partage avec un module distant.

Si la ligne de la table 8, indexée par les m bits du champ A5, contient une valeur d'adresse A6 égale à celle du bloc traité et qu'au moins un bit du code de statut indique un partage, cela signifie qu'un autre module que le module 10, par exemple le module 20, y a accédé précédemment. Le traitement du bloc dépend alors de son accès précédent par le module 20 distant et du traitement lié à ce bloc. Si le code de statut S2 indique que le bloc est actuellement d'usage partagé, l'organe 6 détermine s'il est nécessaire de faire une transaction avec le module 20 distant.

Si le code de statut S2 indique que le bloc a été modifié par un module distant, une requête Q1 de lecture nécessite une transaction avec le module distant qui détient une copie valide du bloc pour rapatrier cette copie valide dans la mémoire physique résidente dans le module 10, l'organe 6 génère alors un signal LM d'échec local pour indiquer un accès en mémoire locale manqué (local miss en anglais) qui s'accompagnent d'au moins une transaction avec un module distant. Le signal LM est écrit dans le registre 18, puis l'organe 6 remet à jour le code S2 à un statut non modifié en fin de transaction.

Si le code de statut S2 n'indique pas que le bloc a été modifié par un module distant, une requête Q1 de lecture ne nécessite de transaction avec aucun module distant car le module 10 détient une copie valide du bloc, l'organe 6 génère alors un signal LH de succès local. Par contre, un signal S1 de modification ou une requête Q2 d'écriture du bloc nécessite une transaction avec chaque module distant pour lequel un bit du code S2 indique une présence, de façon à lui signaler que la copie du bloc qu'il détient, n'est pas valide, l'organe 6 génère alors un signal LM d'échec local.

La génération des signaux LH et LM a été expliqué ici avec un mécanisme antémémoire de réécriture (write back en anglais). Avec un mécanisme antémémoire d'écriture simultanée (write through en anglais), on comprendra que la requête Q1 ne nécessite pas de transaction car le module 10 détient une copie à jour du bloc, l'organe 6 générant alors un signal LH, et que la requête Q2 ou le signal S1 nécessite une transaction avec au moins un module 20 distant pour remettre la copie du bloc à jour dans ce module, l'organe 6 générant alors un signal LM.

La table 9 est indexée par n bits de poids faible de l'adresse logique qui constituent un champ A8. La valeur du nombre n détermine directement la taille de la table 9 dont le nombre de lignes est alors égal à 2ⁿ. Chaque ligne de la table 9 contient un code de statut S3 et le champ A7 de l'adresse logique qui référence une copie de bloc directement indexée dans l'antémémoire 15 par le champ A8. La taille de l'antémémoire 15 est donc de 2ⁿ blocs. Le code de statut S3 est par exemple constitué de deux bits pour coder trois états Inv, Sha, Mod, qui indiquent l'état d'un bloc référencé dans la table 9 par le champ A8. L'état Inv indique que le bloc référencé est invalide, c'est à dire que le bloc référencé a été modifié par un module distant 20, 40 ou 60. L'état Sha indique que le bloc référencé est partagé par au moins un module distant 20, 40, 60. L'état Mod indique que le bloc référencé a été modifié par le module 10 local et que sa copie dans l'antémémoire 15 est à jour.

Si la ligne indexée par les n bits du champ A8 contient une valeur de champ A7' égale à celle du bloc traité, cela signifie que le bloc résident dans un autre module que le module 10, par exemple dans le module 20, a été copié dans l'antémémoire 15 commune aux processeurs 1 à 4. La taille de l'antémémoire est dimensionnée pour contenir 2ⁿ blocs référencés dans la table 9. La taille de la table 9 étant paramétrable par choix de la valeur de n, il en est de même de la taille de l'antémémoire 15. Un moyen intéressant de permettre cette paramétrabilité est de retirer de la mémoire 5 une zone d'adressage réservée et de l'allouer à l'antémémoire 15. Ce moyen est alors reporté dans chaque module distant 20, 40, 60 pour allouer une zone d'adressage réservé dans la mémoire 25, 45, 65 à une antémémoire 35, 55, 75. La taille des antémémoires 15, 35, 55, 75 étant faible devant celle des mémoires 5, 25, 45, 65, ce moyen ne diminue que faiblement la taille de la mémoire commune à tous les modules.

L'organe 6 considère alors le code de statut S3 du bloc référencé dans la table 9, c'est à dire du bloc traité par le signal Si ou une requête Q1, Q2. Si le code de statut S3 indique que le bloc est invalide, l'organe 6 génère les mêmes transactions et les mêmes signaux que si la ligne indexée par les n bits du champ A8 contient une valeur de champ A7' différente de celle du bloc traité, tel qu'expliqué plus loin dans la description.

Si le code de statut S3 indique que le bloc n'est pas partagé par un autre module, aucune transaction avec un module distant n'est nécessaire et l'organe 6 génère un signal RH de succès distant pour indiquer un accès en mémoire distante honoré (remote hit en anglais) sans transaction avec un module distant.

Si le code de statut dans la table 9 indique que le bloc est actuellement d'usage partagé, l'organe 6 détermine s'il est nécessaire de faire une transaction avec le module 20 distant. Pour le signal S1, une transaction est nécessaire pour écrire dans le code de statut S2 du module 20, dans lequel le bloc est résident, que le bloc est modifié, et dans le code de statut S3 du module 40 ou 60 qui possède une copie du bloc dans son antémémoire 55, 75, que le bloc est invalide; l'organe 6 génère alors un signal RM d'échec distant pour indiquer un accès distant manqué (remote miss en anglais) pour lequel au moins une transaction avec un module distant est déclenchée. L'organe 6 déclare dans son code de statut S3 que le bloc est modifié. Pour la requête Q2 d'écriture dans la mémoire, distante au module 10, aucune transaction n'est nécessaire et l'organe 6 génère un signal RH de succès distant. Pour la requête Q1 de lecture: si le code de statut S3 dans la table 9 indique que le contenu du bloc dans le module 10 est valide, aucune transaction n'est nécessaire et l'organe 6 génère alors un signal RH de succès distant; si le code de statut dans la table 9 indique que le contenu du bloc dans le module 10 est invalide, une transaction est nécessaire pour mettre à jour le contenu du bloc dans le module 10 et l'organe 6 génère alors un signal RM d'échec distant et déclare en fin de transaction que le bloc est valide dans son code de statut S3. La génération des signaux RH et RM a été expliqué ici avec un mécanisme antémémoire de réécriture. Avec un mécanisme antémémoire d'écriture simultanée (write through en anglais), il suffit de modifier la logique décrite de sorte que le signal S1 et la requête Q2 nécessitent une transaction avec le module 20, 40, 60 distant pour y remettre le bloc à jour, le module 6 générant alors un signal RM, et de sorte que la requête Q1 ne nécessite pas de transaction car le contenu du bloc est systématiquement remis à jour.

Si la ligne indexée par les n bits contient une valeur d'adresse différente de celle du bloc traité, cela signifie que le bloc adressé logiquement dans l'antémémoire 15 par l'indexation de la table 9, est différent du bloc traité. Il est alors nécessaire de remplacer le bloc référencé dans la table 9 par le bloc traité. L'organe 6 génère alors un signal RM. L'organe 6 génère aussi dans ce cas un signal S4 pour indiquer un remplacement dans l'antémémoire 15, du bloc répertorié par le bloc traité. Le signal S4 est émis sur le bus 7 pour invalider, dans les antémémoires privées 11 à 14, le bloc répertorié dans l'antémémoire 15 car la table 9 ne pourra plus assurer sa cohérence. L'organe 6 informe aussi l'organe 26, 46 ou 66 du module de résidence qu'il ne référence plus le bloc de sorte que l'organe 26, 46 ou 66 baisse le bit de présence correspondant au module 10 dans la ligne de la table 28, 48 ou 68 ou le bloc était référencé. L'organe6 effectue ensuite une remise à jour de la table 9 au moyen d'une transaction avec les modules 20, 40 et 60 distants pour rapatrier le bloc traité à un emplacement physique adressé logiquement dans l'antémémoire 15 par l'indexation de la table 9. La transaction consiste essentiellement à émettre une requête de lecture à destination du module distant 20, 40 ou 60 de résidence du bloc. Pour simplifier la description, nous supposons par exemple que le module de résidence du bloc est le module 20.

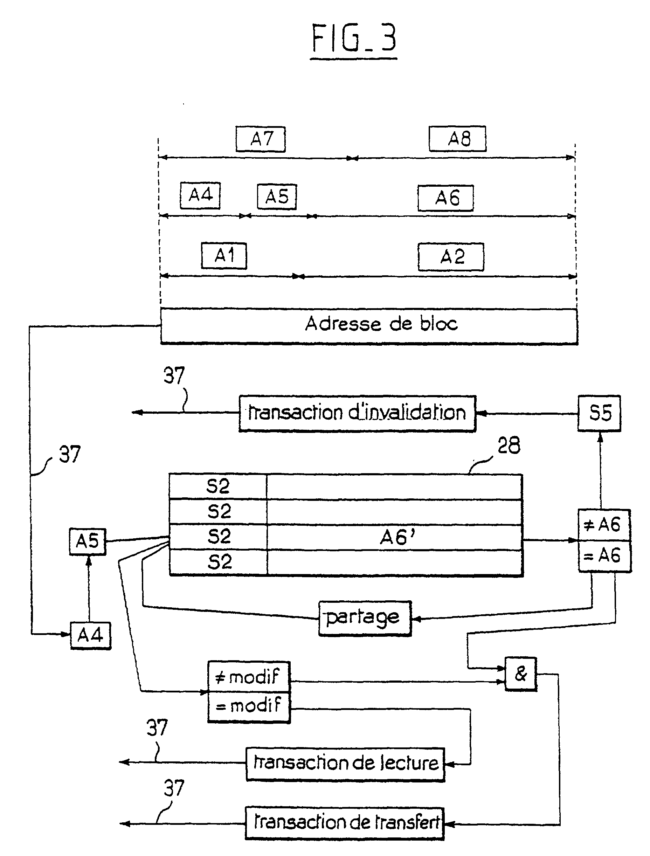

La figure 3 présente un deuxième niveau de détails de l'organe 6, 26, 46, 66, avec les éléments matériels et logiques mis en oeuvre lorsqu'une adresse de bloc constituée des champs A1 et A2, arrive dans le module de résidence de ce bloc, en provenance d'autres modules par la liaison 17, 37, 57, 77. Les remarques faites dans le préambule d'introduction à la figure 2 restent valables pour la figure 3. En particulier les références mises sur la figure 3 sont celles de l'organe 26 pour faciliter la suite de la description.

Si le bloc traité est répertorié dans la table 28, son code de statut S2 est mis à jour pour indiquer que le bloc est partagé par le module 10. Si, à la ligne de la table 28 répertoriant le bloc traité, le code de statut S2 indique que le bloc n'est modifié par aucun autre module 40, 60, l'organe 26 transmet une copie du bloc à l'organe 6. Cette copie est obtenue par lecture dans la mémoire 25 ou dans l'une des antémémoires 31 à 34. Si le code de statut indique que le bloc est modifié, l'organe 26 émet une requête de lecture vers celui des modules 40, 60 qui possède la version la plus à jour du bloc. L'organe 46, 66 qui possède la copie la plus à jour, transmet la copie du bloc à l'organe 6 du module 10 et à l'organe 26 du module 20. L'organe 26 remet à jour sa mémoire locale 25', et son code S2 au statut partagé. L'organe 6 répertorie le bloc dans la table 9 avec un code de statut partagé et non modifié et écrit le bloc dans l'antémémoire 15. Ensuite, l'organe 6 émet un acquittement vers l'organe 26 qui ajoute dans son code de statut S2 le partage avec le module 10.

Si le bloc traité n'est pas répertorié dans la table 28, l'organe 26 génère un signal S5 pour indiquer que le bloc répertorié sera remplacé par le bloc traité. Si le code de statut S2 du bloc répertorié indique que celui-ci a été modifié par un module 10, 40 ou 60, l'organe 26 émet une requête de lecture vers celui des modules 10, 40, 60 qui détient la version la plus à jour du bloc. L'organe 6, 46, 66 dont le code S3 du bloc référencé indique que sa copie du bloc est modifiée, transmet une copie du bloc à l'organe 26 du module 20 pour remettre à jour sa mémoire locale 25'. Le signal S5 est émis vers le ou les organes 6, 46, 66 qui référencent le bloc à une ligne de leur table 9, 49, 69, de façon à ce que chacun mette à jour son code S3 au statut invalide. Ensuite, l'organe 26 répertorie le bloc traité dans sa table 28 avec un code de statut S2 indiquant que le bloc est partagé avec le module 10, non modifié. Enfin, l'organe 26 transmet le contenu du bloc traité vers l'organe 6 qui répertorie le bloc dans la table 9 avec un code de statut non invalidé, partagé et non modifié et écrit le bloc dans l'antémémoire 15. Si le code de statut S2 du bloc répertorié dans la table 28, n'indique pas que celui-ci a été modifié, le signal S5 est émis vers le ou les organes 6, 46, 66 qui référencent le bloc à une ligne de leur table 9, 49, 69 de façon à ce que chacun mette à jour son code S3 au statut invalide. Ensuite, l'organe 26 répertorie le bloc traité dans sa table 28 avec un code de statut S2 indiquant que le bloc est partagé avec le module 10, non modifié. Enfin, l'organe 26 transmet le contenu du bloc traité vers l'organe 6 qui répertorie le bloc dans la table 9 avec un code de statut non invalidé, partagé et non modifié et écrit le bloc dans l'antémémoire 15.

Les explications qui précèdent s'appuient sur un mécanisme antémémoire à correspondance directe. La mise en oeuvre de l'enseignement ainsi procuré ne devrait pas poser de difficulté insurmontable à l'homme du métier pour utiliser d'autres mécanismes antémémoire connus tels que ceux à correspondance associative ou à correspondance associative par ensemble blocs, dans tout ou partie des antémémoires privées 11 à 14, 31 à 34, 41 à 44, 61 à 64 et des tables 8, 9, 28, 29, 48, 49, 68, 69.

En particulier, il est intéressant d'utiliser dans les tables 8, 28, 48, 68, une correspondance associative par ensemble de blocs. Pour un même nombre m de bits constituant le champ A5, une correspondance associative par ensemble, par exemple de quatre blocs, nécessite quatre fois plus de mémoire pour la table 8 qu'une correspondance directe, car chaque ligne peut alors référencer quatre blocs avec chacun son code de statut S2. Cependant, en correspondance directe, lorsqu'un bloc nécessite d'être référencé à une ligne indexée par son champ A5, il n'y a pas de problème si la ligne est disponible mais il est nécessaire de faire un remplacement si la ligne référence déjà un autre bloc dont le champ A6' est différent du champ A6 du bloc à référencer. Une ligne est disponible si aucun bloc n'y est réfencé ou si le code de statut S2 du bloc déjà référencé n'indique aucune présence de partage avec un module distant, la référence d'un tel bloc étant alors dite invalide. Avantageusement, en correspondance associative par ensemble, par exemple de quatre blocs, une ligne est disponible si moins de quatre blocs y sont référencés ou si la référence d'au moins un bloc déjà référencé est invalide. Les chances pour que la référence d'un bloc déjà référencé soit invalide avant qu'un nouveau bloc soit à référencer ont ainsi augmenté en comparaison d'un mécanisme à correspondance directe. Si un remplacement est nécessaire à cause d'une indisponibilité de ligne, celui-ci peut se faire sur le bloc le plus ancien ou sur le bloc avec le plus petit nombre de bits de présence levés dans son code de statut S2. On diminue ainsi l'éventualité qu'un autre module redemande immédiatement de référencer un bloc qui vient d'être remplacé.

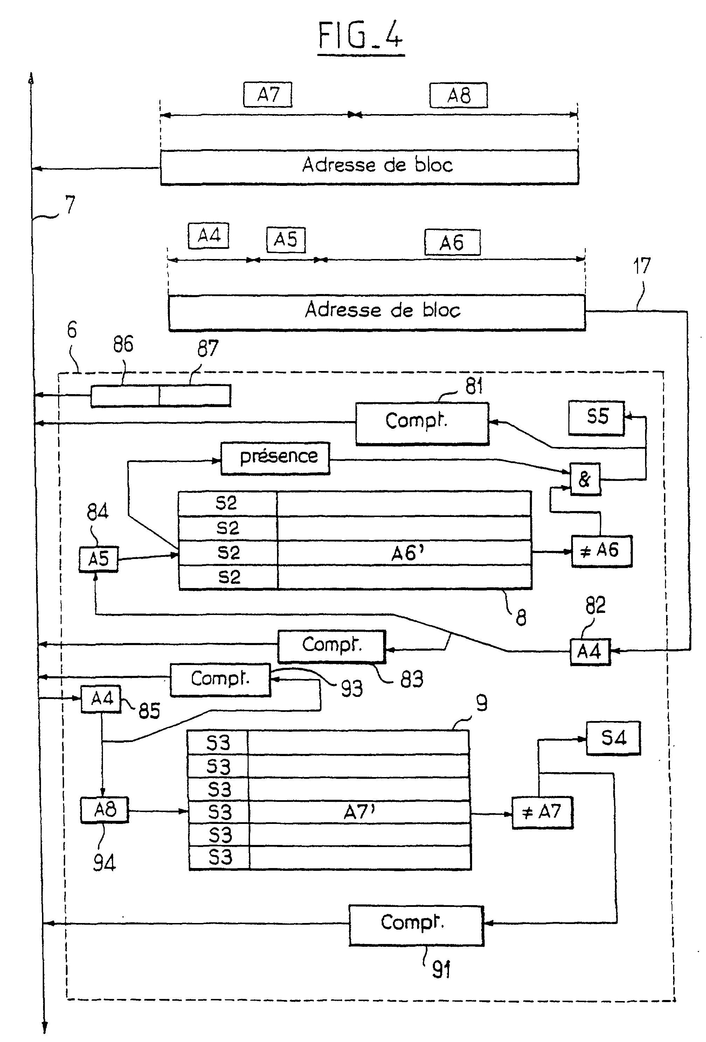

La figure 4 présente des détails supplémentaires de l'organe 6. Les organes 26, 46, 66 sont identiques. On s'intéresse ici d'une part aux adresses de blocs circulant sur le bus 7 qui concernent les blocs résidant dans d'autres modules que le module 10 et d'autre part aux adresses de blocs en provenance de la liaison 17 qui concernent les blocs résidant dans le module 10. Le découpage d'une adresse de bloc circulant sur le bus 7, n'est ici représenté que par les champs A7 et A8, les bits de poids fort du champ A7 comprenant le champ A4, et le découpage d'une adresse de bloc en provenance de la liaison 17, n'est ici représenté que par les champs A4 à A6, car nous avons vu précédemment que les champs A1 et A2 étaient plus particulièrement utiles pour le niveau d'antémémoires privées 11 à 14. Un filtre 85 aiguille une adresse de bloc circulant sur le bus 7, vers la table 9 si le champ A4 concerne une adresse de bloc résidant dans un module 20, 40, 60, distant du module 10. Un registre d'index 94 pointe sur une entrée de la table 9 adressée par le champ A8 de l'adresse de bloc. Un filtre 82 aiguille une adresse de bloc en provenance de la liaison 17, vers la table 8 si le champ A4 concerne une adresse de bloc résidant dans le module 10. Un registre d'index 84 pointe sur une entrée de la table 8 adressée par le champ A5 de l'adresse de bloc. Les filtres 82 et 85 sont distincts ou possèdent tout ou partie de leurs éléments en commun.

A chaque foi que le filtre 82 aiguille une adresse de bloc en provenance de la liaison 17 vers la table 8, un compteur 83 est incrémenté. Le compteur 83 comptabilise le nombre d'accès à la table 8 par un module distant. Le compteur 83 est accessible en lecture par le bus 7.

Le filtre 82 aiguillant l'adresse du bloc vers la table 8, nous avons vu à propos de la description de la figure 3 que l'organe 6 déterminait si le bloc était déjà répertorié dans la table 8 en comparant le champ A6 du bloc entrant avec le champ A6' d'un bloc déjà répertorié dans une ligne de la table 8.Si aucune ligne de la table 8 pointée par le registre 84 n'était disponible pour contenir une valeur A6' égale à la valeur du champ A6 de l'adresse du bloc présenté, un signal S5 était généré dans l'organe 6 pour indiquer la nécessité d'un remplacement, de façon à répertorier le bloc demandé depuis la liaison 17 à la place d'un bloc précédemment répertorié. Ce remplacement engendre par ailleurs une ou plusieurs transactions avec les autres modules 20, 40, 60, pour transmettre à celui des modules 20, 40, 60 à l'origine de la présentation de l'adresse présentée sur la liaison 17, une copie à jour du bloc nouvellement répertorié. A chaque génération de signal S5, un compteur de remplacement 81 est incrémenté. Le contenu du compteur 81 est accessible sur le bus 7, par exemple en lecture de type entrée-sortie.

A chaque foi que le filtre 85 aiguille une adresse de bloc en provenance du bus 7 vers la table 9, un compteur 93 est incrémenté. Le compteur 93 comptabilise le nombre d'accès à la table 9 par le module local 10. Le compteur 93 est accessible en lecture par le bus 7. Nous avons vu en référence à la figure 2 que chaque accès à la table 9 par le module 10 générait un signal RH ou un signal RM. Si le nombre de signaux RH et le nombre de signaux RM sont comptabilisés par ailleurs, le nombre d'accès à la table 9 peut être calculé comme étant égal à la somme du nombre de signaux RH et du nombre de signaux RM.

Si le filtre 85 aiguille l'adresse du bloc vers la table 9, nous avons vu à propos de la description de la figure 2 que, si la valeur A7' contenue dans la ligne de la table 8 pointée par le registre 84 était différente de la valeur du champ A7 de l'adresse du bloc présenté, un signal S4 était généré dans l'organe 6 pour indiquer la nécessité d'un remplacement, de façon à répertorier le bloc circulant sur le bus 7 à la place du bloc précédemment répertorié. Ce remplacement engendre par ailleurs une ou plusieurs transactions avec les autres modules 20, 40, 60, pour ranger dans la mémoire 15, une copie à jour du bloc nouvellement répertorié. A chaque génération de signal S4, un compteur de remplacement 91 est incrémenté. Le contenu du compteur 91 est accessible sur le bus 7, par exemple en lecture de type entrée-sortie.

Il convient d'aprécier que le contenu du compteur 91 est corrélé au nombre de transactions nécessaires pour faire des remplacements dans la table 9, et uniquement au nombre de ces transactions. Le contenu du compteur 91 est indépendant des transactions qui ne nécessitent pas de remplacement. Par exemple en figure 2, si le code de statut S3 du bloc contenu dans la ligne pointée par le champ A8 indique un état invalide, au moins une transaction est nécessaire avec un module distant. Cependant, si la valeur A7' contenue dans cette ligne est égale à la valeur du champ A7, le bloc adressé est déjà répertorié et ne nécessite donc pas de remplacement de cette ligne. Bien que générant un signal d'échec RM, ce cas n'influence pas le contenu du compteur 91.

Chacun des compteurs 81, 83, 91, 93 est prévu pour envoyer sur le bus 7, une interruption en cas de débordement. On distingue encore sur la figure 4, un registre de contrôle 86 et un registre d'état 87. Le registre 86 est accessible sur le bus 7 en lecture et en écriture. Le registre 87 est accessible sur le bus 7 en lecture et remis systématiquement à zéro par une lecture de son contenu.

Le registre 87 contient, pour chaque compteur 81, 83, 92, 93, un bit dont un état logique déterminé signale un débordement du compteur auquel est affecté ce bit.

Le registre 86 contient des bits pour contrôler les compteurs 81, 83 91, 93 au moyen d'une logique combinatoire non représentée pour ne pas surcharger inutilement la figure. Un premier bit est prévu pour désactiver inconditionnellement les compteurs 81 et 83 de façon à ce qu'un état logique du bit fasse que les contenus de compteurs ne puissent être modifiés suite à tout nouvel accès à la table 8 et à ce que l'état logique complémentaire du bit fasse que les contenus de compteurs puissent être modifiés suite à tout nouvel accès à la table 8. Un deuxième bit est prévu pour désactiver conditionnellement les compteurs 81 et 83 de façon à ce qu'un état logique du bit fasse que les contenus de compteurs ne puissent être modifiés par un nouvel accès à la table 8, suite à un débordement signalé par un bit du registre 87 et à ce que l'état logique complémentaire du bit fasse que les contenus de compteurs 81 et 83 puissent être modifiés par un nouvel accès à la table 8, indépendamment du contenu du registre 87. Un troisième bit est prévu pour désactiver l'interruption en cas de débordement mentionnée précédemment, de façon à ce qu'un état logique du bit fasse que l'interruption soit active et à ce que l'état logique complémentaire du bit fasse que l'interruption soit inactive. Un quatrième bit est prévu pour remettre à zéro le contenu des compteurs 81, 83. De façon identique pour les accès à la table 9, un premier, un deuxième, un troisème et un quatrième bit gèrent l'activation des compteurs 91 et 93. Ces bits peuvent être les mêmes que ceux gérant les compteurs 81 et 83 ou des bits propres aux compteurs 91 et 93. On peut prévoir un quatrième bit commun à tous les compteurs ou autant de quatrièmes bits qu'il existe de compteurs, chaque quatrième bit agissant alors sur le compteur auquel il est affecté.

Il convient d'apprécier que la gestion des compteur, physiquement localisée dans l'organe 6, se fait sans perturber les accès mémoire par le bus 7 et la liaison 17, opérés par les processus exécutés par les processeurs 1 à 4, 21 à 24, 41 à 44, 61 à 64. Ainsi, le comptage des remplacements ne génère-t-il pas lui-même de succès ou d'échecs antémémoires. De plus, en réalisant les accès par le bus 7, aux compteurs 81, 83, 91, 93 par des lectures et ou écritures de type entrée-sortie, on ne fait pas intervenir de mécanismes antémémoires liés aux tables 8 et 9. Les seuls processus susceptibles de perturber les mécanismes antémémoire sont les processus d'exploitation du contenu des compteurs 81, 83, 91, 93, utiles pour éditer des comptes-rendus sur les performances du système d'exploitation ou des applications exécutées par le machine.

Cependant, ces processus peuvent être suffisamment insignifiants en regard des autres processus exécutés par la machine pour que les mesures qu'ils permettent d'obtenir, soient pratiquement identiques à celles obtenues en l'absence totale d'influence de ces processus de mesures, sur les mécanismes antémémoire.

L'architecture des registres 86 et 87 permet de créer différents types de processus de mesures mis en oeuvre par des programmes exécutés dans les processeurs 1 à 4. On peut citer ceux déclenchés par une interruption générée dans le registre 87, ou ceux déclenchés périodiquement en interagissant avec le registre 86. Un processus de mesure lit simultanément le contenu des deux compteurs 81, 83 et ou des deux compteurs 91, 93 et traite les valeurs obtenues.

En divisant le contenu du compteur 81 par le contenu du compteur 83, le processus de mesure détermine un taux de remplacement par accès des modules distants 20, 40, 60 à la table 8. En divisant le contenu du compteur 91 par le contenu du compteur 93, le processus de mesure détermine un taux de remplacement par accès du module local 10 à la table 9.

Nous avons vu précédemment que chaque remplacement dans la table 8 ou dans la table 9 était accompagné d'une ou plusieurs transactions entre modules pour mettre à jour ou invalider des copies de blocs détenues par d'autres modules que le module de résidence. Ces transactions ont des latences dont un cumul trop important risque de ralentir de façon sensible la machine. Il est préférable de fixer un seuil de nombre de remplacements par accès, dont le dépassement est jugé nuire aux performances de la machine.

Plus la quantité de blocs référençables par ligne d'une table est élevée, plus il risque d'y avoir de remplacements, un seul bloc pouvant être référencé à la fois par une ligne. Pour que les nombres de remplacements ne dépassent pas le seuil fixé, on dimensionne alors les tables de façon à ce que chaque ligne référence une quantité de blocs qui n'entraîne pas de nombre de remplacements supérieur au seuil fixé. En faisant fonctionner la machine, les compteurs de remplacement permettent de vérifier que les tables sont correctement dimensionnées et si ce n'est pas le cas d'augmenter la taille des tables en conséquence.

## Revendications

1. Procédé de production de machine constituée de plusieurs modules (10,20,40,60), un module (10) considéré comprenant une mémoire physique (5) constituée d'au moins deux parties,
- une première partie (5') pour contenir des blocs de données résidents dans le module (10) considéré,
- une deuxième partie (15) pour contenir des copies de bloc de données résidents dans d'autres modules (20,40,60),
le procédé consistant à :
- doter le module (10) considéré d'une première table (8 dite LMD pour Local Memory Directory) et d'une deuxième table (9 dite RCT pour Remote Cache Table) contenant chacune un nombre de lignes prédéterminé et limité, chaque ligne de la première table (LMD 8) étant destinée à répertorier une adresse de bloc résident dans la première partie (5') de mémoire physique disponible pour être partagé avec un ou plusieurs autres modules (20,40,60) et à répertorier une autre adresse de bloc résident dans la première partie (5') de mémoire physique par remplacement suite à une demande d'un autre module (20,40,60), chaque ligne de la deuxième table (RCT 9) étant destinée à référencer une adresse de bloc résident dans un autre module (20,40,60) et dont une copie est accessible à un emplacement de la deuxième partie (15) de mémoire physique correspondant à cette ligne et à référencer une autre adresse de bloc résident dans un autre module (20,40,60) par remplacement suite à une demande d'accès du module (10) considéré,
- faire fonctionner la machine dans un mode d'exploitation donné, en comptant un nombre de remplacements dans la première table (LMD 8) et ou un nombre de remplacements dans la deuxième table (RCT 9), et
- adapter l'architecture de la machine en munissant la première table (8) et/ou la deuxième table (9) d'un nombre de lignes tel que le nombre de remplacements dans la première ou dans la deuxième table soit en moyenne inférieur à un seuil pour ledit mode d'exploitation donné.

2. Procédé selon la revendication 1, **caractérisé en ce que** la moyenne du nombre de remplacements dans la première table LMD (8), respectivement dans la deuxième table RCT (9), est calculée en divisant le nombre de remplacement par un nombre total d'accès à la première table LMD (8), respectivement à la deuxième table RCT (9).

3. Machine constituée de plusieurs modules (10,20,40,60), chaque module considéré (10) comprenant une mémoire physique (5) constituée d'au moins deux parties,
- une première partie (5') pour contenir des blocs de données résidents dans le module considéré,
- une deuxième partie (15) pour contenir des copies de bloc de données résidents dans d'autres modules,
le module considéré comprenant :
- une première table (8 dite LMD pour Local Memory Directory) et une deuxième table (9 dite RCT pour Remote Cache Table) contenant chacune un nombre de lignes prédéterminé et limité, chaque ligne de la première table (LMD 8) étant destinée à répertorier une adresse de bloc résident dans la première partie de mémoire physique (5') disponible pour être partagé avec un ou plusieurs autres modules (20,40,60) et à répertorier une autre adresse de bloc résident dans la première partie de mémoire physique par remplacement culte à une demande d'accès d'un autre module, chaque ligne de la deuxième table (RCT 9) étant destinée à référencer une adresse de bloc résident dans un autre module (20,40,60) et dont une copie est accessible à un emplacement de la deuxième partie de mémoire physique (15) correspondant à cette ligne et à référencer une autre adresse de bloc résident dans un autre module par remplacement suite à une demande d'accès du module considéré,
- un compteur (81) du nombre de remplacements dans la première table (LMD 8) et ou un compteur (91) du nombre de remplacements dans la deuxième table (RCT 9).

4. Machine selon la revendication 3, **caractérisée en ce que** chaque module comprend respectivement un organe (6,26,46,66) pour communiquer avec les autres modules, et **en ce que** chaque organe comprend deux tables du type desdites tables (8,9) et deux compteurs du type desdits compteurs (81,91).

5. Machine selon la revendication 4, **caractérisée en ce qu'**un organe (6) comprend un moyen de comptage (83) du nombre total d'accès à la première table (LMD 8) et/ou un moyen de comptage (93) du nombre total d'accès à la deuxième table (RCT 9).

## Patentansprüche

1. Verfahren für die Herstellung einer Maschine, die aus mehreren Modulen (10, 20, 40, 60) gebildet ist, wobei ein betrachtetes Modul (10) einen physikalischen Speicher (5) umfaßt, der aus wenigstens zwei Teilen gebildet ist,
- einem ersten Teil (5'), der Datenblöcke enthält, die in dem betrachteten Modul (10) resident vorhanden sind, und
- einem zweiten Teil (15), der Kopien von Datenblöcken enthält, die in anderen Modulen (20, 40, 60) resident vorhanden sind,
wobei das Verfahren darin besteht:
- das betrachtete Modul (10) mit einer ersten Tabelle (8, sogenanntes LMD, für Local Memory Directory) und mit einer zweiten Tabelle (9, sogenannte RCT, für Remote Cache Table) zu versehen, die jeweils eine vorgegebene und begrenzte Anzahl von Zeilen besitzen, wobei jede Zeile der ersten Tabelle (LMD 8) dazu bestimmt ist, eine Adresse eines im ersten Teil (5') des physikalischen Speichers resident vorhandenen Blocks, die verfügbar ist, um von einem oder mehreren weiteren Modulen (20, 40, 60) gemeinsam genutzt zu werden, zu verzeichnen und eine weitere Adresse eines im ersten Teil (5') des physikalischen Speichers resident vorhandenen Blocks durch Ersetzung infolge einer Anforderung von einem weiteren Modul (20, 40, 60) zu verzeichnen, während jede Zeile der zweiten Tabelle (RCT 9) dazu bestimmt ist, auf eine Adresse eines in einem weiteren Modul (20, 40, 60) resident vorhandenen Blocks Bezug zu nehmen, der an einer dieser Zeile entsprechenden Stelle des zweiten Teils (15) des physikalischen Speichers eine Kopie besitzt, auf die zugegriffen werden kann, und auf eine weitere Adresse eines in einem weiteren Modul (20, 40, 60) resident vorhandenen Blocks durch Ersetzung infolge einer Zugriffsanforderung des betrachteten Moduls (10) Bezug zu nehmen,
- die Maschine in einer gegebenen Betriebsart arbeiten zu lassen, indem eine Anzahl von Ersetzungen in der ersten Tabelle (LMD 8) und/oder eine Anzahl von Ersetzungen in der zweiten Tabelle (RCT 9) gezählt wird, und
- die Architektur der Maschine anzupassen, indem die erste Tabelle (8) und/oder die zweite Tabelle (9) mit einer Anzahl von Zeilen versehen wird, derart, daß die Anzahl von Ersetzungen in der ersten oder in der zweiten Tabelle im Mittel kleiner als ein Schwellenwert für die gegebene Betriebsart ist.

2. Verfahren nach Anspruch 1, **dadurch gekennzeichnet, daß** der Mittelwert der Zahl von Ersetzungen in der ersten Tabelle LMD (8) bzw. in der zweiten Tabelle RCT (9) dadurch berechnet wird, daß die Anzahl von Ersetzungen durch eine Gesamtzahl von Zugriffen auf die erste Tabelle LMD (8) bzw. auf die zweite Tabelle RCT (9) dividiert wird.

3. Maschine, die aus mehreren Modulen (10, 20, 40, 60) gebildet ist, wobei jedes betrachtete Modul (10) einen physikalischen Speicher (5) umfaßt, der aus wenigstens zwei Teilen gebildet ist,
- einem ersten Teil (5'), der Blöcke von Daten enthält, die im betrachteten Modul resident vorhanden sind, und
- einem zweiten Teil (15), der Kopien von Blöcken von Daten enthält, die in weiteren Modulen resident vorhanden sind,
wobei das betrachtete Modul umfaßt:
- eine erste Tabelle (8, sogenanntes LMD, für Local Memory Directory) und eine zweite Tabelle (9, sogenannte RCT, für Remote Cache Table), die jeweils eine vorgegebene und begrenzte Anzahl von Zeilen enthalten, wobei jede Zeile der ersten Tabelle (LMD 8) dazu bestimmt ist, eine Adresse eines im ersten Teil des physikalischen Speichers (5') resident vorhandenen Blocks, die verfügbar ist, um von einem oder mehreren weiteren Modulen (20, 40, 60) gemeinsam genutzt zu werden, zu verzeichnen und eine weitere Adresse eines im ersten Teil des physikalischen Teil des Speichers resident vorhandenen Blocks durch Ersetzung infolge einer Zugriffsanforderung von einem weiteren Modul zu verzeichnen, während jede Zeile der zweiten Tabelle (RCT 9) dazu bestimmt ist, auf eine Adresse eines in einem weiteren Modul (20, 40, 60) resident vorhandenen Blocks, der an einer dieser Zeile entsprechenden Stelle des zweiten Teils des physikalischen Speichers (15) eine Kopie besitzt, auf die zugegriffen werden kann, und auf eine weitere Adresse eines in einem weiteren Modul resident vorhandenen Blocks durch Ersetzung infolge einer Zugriffsanforderung des betrachteten Moduls Bezug zu nehmen, und
- einen Zähler (81) für die Anzahl von Ersetzungen in der ersten Tabelle (LMD 8) und/oder einen Zähler (91) für die Anzahl von Ersetzungen in der zweiten Tabelle (RCT 9).

4. Maschine nach Anspruch 3, **dadurch gekennzeichnet, daß** jedes Modul jeweils ein Organ (6, 26, 46, 66) für die Kommunikation mit den weiteren Modulen umfaßt und daß jedes Organ zwei Tabellen des Typs der genannten Tabellen (8, 9) sowie zwei Zähler des Typs der genannten Zähler (81, 91) umfaßt.

5. Maschine nach Anspruch 4, **dadurch gekennzeichnet, daß** ein Organ (6) ein Zählmittel (83) für die Gesamtanzahl von Zugängen zur ersten Tabelle (LMD 8) und/oder ein Zählmittel (93) für die Gesamtzahl von Zugängen zu der zweiten Tabelle (RCT 9) umfaßt.

## Claims

1. Method of production of a machine constituted by several modules (10, 20, 40, 60), one module (10) in question comprising a physical memory (5) constituted by at least two parts,
- a first part (5') for containing data blocks resident in the module (10) in question,
- a second part (15) for containing copies of data blocks resident in other modules (20, 40, 60),
the method consisting in:
- providing the module (10) in question with a first table (8 known as LMD for Local Memory Directory) and with a second table (9 known as RCT for Remote Cache Table) each containing a predetermined and limited number of lines, each line of the first table (LMD 8) being intended to list a block address resident in the first part (5') of physical memory available to be shared with one or more other modules (20, 40, 60) and to list another block address resident in the first part (5') of physical memory by replacement following a request from another module (20, 40, 60), each line of the second table (RCT 9) being intended to reference a block address resident in another module (20, 40, 60) and a copy of which is accessible at a location in the second part (15) of physical memory corresponding to that line and to reference another block address resident in another module (20, 40, 60) by replacement following a request for access from the module (10) in question,
- causing the machine to function in a given operating mode, by counting a number of replacements in the first table (LMD 8) and/or a number of replacements in the second table (RCT 9), and
- adapting the architecture of the machine by providing the first table (8) and/or the second table (9) with a number of lines such that the number of replacements in the first or in the second table is on average lower than a threshold for said given operating mode.

2. Method according to Claim 1, **characterised in that** the average of the number of replacements in the first table LMD (8) and in the second table RCT (9), respectively, is calculated by dividing the number of replacements by a total number of accesses to the first table LMD (8) or to the second table RCT (9), respectively.

3. Machine constituted by several modules (10, 20, 40, 60), each module in question (10) comprising a physical memory (5) constituted by at least two parts,
- a first part (5') for containing data blocks resident in the module in question,
- a second part (15) for containing copies of data blocks resident in other modules,
the module in question comprising:
- a first table (8 known as LMD for Local Memory Directory) and a second table (9 known as RCT for Remote Cache Table) each containing a predetermined and limited number of lines, each line of the first table (LMD 8) being intended to list a block address resident in the first part of physical memory (5') available to be shared with one or more other modules (20, 40, 60) and to list another block address resident in the first part of physical memory by replacement following a request for access from another module, each line of the second table (RCT 9) being intended to reference a block address resident in another module (20, 40, 60) and a copy of which is accessible at a location in the second part of physical memory (15) corresponding to that line and to reference another block address resident in another module by replacement following a request for access from the module in question,
- a counter (81) of the number of replacements in the first table (LMD 8) and/or a counter (91) of the number of replacements in the second table (RCT 9).

4. Machine according to Claim 3, **characterised in that** each module comprises respectively a member (6, 26, 46, 66) for communicating with the other modules, and **in that** each member comprises two tables of the type of said tables (8, 9) and two counters of the type of said counters (81, 91).

5. Machine according to claim 4, **characterised in that** a member (6) comprises a counting means (83) of the total number of accesses to the first table (LMD 8) and/or a counting means (93) of the total number of accesses to the second table (RCT 9).
